# EUROPEAN PATENT APPLICATION

(11) **EP 2 394 766 A1**
(43) Date of publication of application: **14.12.2011**
(21) Application number: 10165579.3
(22) Date of filing: 10.06.2010
(51) Int. Cl.: B23C 5/10

(54) **Double-sided indexable cutting insert and cutting tool**

(71) Applicant: Lamina Technologies SA, 1400 Yverdon-les-Bains (CH)
(72) Inventor: Barazani, Gideon, Kiryat-Bialik (IL)
(74) Representative: Patentanwälte Ruff, Wilhelm, Beier, Dauster & Partner

(57) **Abstract**

The present invention relates to a double-sided indexable cutting insert (1) with first and second end surfaces (2) and four side surfaces (3) connecting the first and second end surfaces (2), wherein eight cutting edges (4) are formed in the transition between the first and second end surfaces (2) and the side surfaces (3), wherein each cutting edge (4) comprises a primary cutting edge (4a), a secondary concave cutting edge (4b) and a secondary convex cutting edge (4c), and each side surface (3) comprises a primary side surface (3a) and two secondary side surfaces (3b), the primary side surface (3a) being arranged between the two secondary side surfaces (3b), wherein the secondary side surfaces (3b) are deflected with respect to the primary side surface (3b) towards a center axis (A) of the insert (1). The invention further relates to a cutting tool (7) having at least one pocket (70) for retaining an insert (1).

## Description

### Technical Field

The present invention relates to a replaceable cutting insert, in particular for milling operations, more particular for square shoulder milling. More particularly, the present invention relates to a double-sided indexable cutting insert. The invention further relates to a cutting tool having at least one pocket for retaining a replaceable insert.

### Background of the Invention

Cutting inserts for use in milling operations, such as end milling, face milling, slot milling and shoulder milling, are well known in the prior art. Numerous applications require a shoulder machining, wherein a 90° shoulder (also referred to as true shoulder) is cut in a work piece. However, when using a double-sided square indexable insert the depth of the true shoulder cut in the work piece is limited by the size of the insert. US 7,604,441 B2 shows a fully indexable square cutting insert, wherein from each corner a primary cutting edge extends along a first side surface in a downward direction towards a median plane and a wiper extends along the adjacent side surface in an upward direction away from the median plane. The insert is used for cutting a true shoulder, wherein the depth of the shoulder depends on the length of the primary cutting edge. Preferably, the primary cutting edge is sufficiently long to provide a cut with a depth, which is between 0.5 and 0.7 of the length of the associated side surface.

Single sided or one-sided replaceable inserts are known for shoulder milling. The restrictions when designing a single sided insert are less than when designing a double-sided insert. Due to various differences, teachings known from single-sided inserts may not be transferred to double-sided inserts. For example, a single sided insert usually is arranged in a cutting tool or cutter in a positive axial angle, whereas double-sided inserts are typically retained with a negative axial angle.

### Summary of the Invention

It is one object of the invention to provide a double-sided indexable cutting insert with eight cutting edges for cutting true shoulders having a depth that is not limited by the insert. It is another object of the invention to provide a cutting tool with at least one double-sided fully indexable cutting insert.

This object is solved by a double-sided indexable insert and a cutting tool with the features of claims 1 and 8. Preferred embodiments are defined in the dependent claims.

It is the basic idea of the invention to provide a double-sided indexable cutting insert comprising a center axis; first and second end surfaces being arranged substantially perpendicular to the center axis and facing opposite directions, each end surface having four associated corners; a median plane perpendicular to the center axis and located between the first and second end surfaces; four side surfaces connecting the first and second end surfaces, wherein eight cutting edges are formed in the transition between the first and second end surfaces and the side surfaces, each cutting edge comprising a primary cutting edge; wherein each cutting edge further comprises a secondary concave cutting edge extending towards the median plane and a secondary convex cutting edge extending away from the median plane, the primary cutting edge being arranged between the secondary concave cutting edge and the secondary convex cutting edge, such that the primary cutting edge, the secondary concave cutting edge and the secondary convex cutting edge constitute together a wave shaped cutting edge. Each side surface comprises a primary side surface and two secondary side surfaces, the primary side surface being arranged between the two secondary side surfaces, wherein the secondary side surfaces are deflected with respect to the primary side surface towards a center axis of the insert, tangential extensions of primary side surfaces of adjacent side surfaces and the first and second end surfaces intersect in first imaginary points, and wherein tangential extensions of adjacent secondary side surfaces and the first and second end surfaces intersect in second imaginary points, the second imaginary points being closer to a center axis of the insert than the first imaginary points.

The first and the second end surfaces are also referred to as top and bottom surface of the insert. In preferred embodiments, the end surfaces each comprise a screw sink hole surfaces at the center of insert, a chip former or chip breaker surface in the periphery boundary and an abutment surface arranged between the screw sink hole surfaces and the chip former surface.

Preferably, the second end surface is a copy the first end surfaces that is rotated at 180° about the horizontal axis x or the vertical axis y of the insert, which are the bisectors of the side surfaces.

In one embodiment, the region of the primary side surface coincides with the primary cutting edge. In other embodiments, the primary side surface also comprises parts of the secondary cutting edges. In still another embodiment, one or both of the secondary side surfaces comprise parts of the primary cutting edges.

The deflection between secondary side surfaces and the primary side surfaces in combination with the wave shape of the cutting edge give the insert the desired suitability to perform square shoulder milling operations of unlimited depth with an indexable insert having eight cutting edges.

The secondary cutting edges of adjacent cutting edges converge at the associated insert corner. In preferred embodiments, the corner is provided with a round truncation for avoiding sharp corners.

When performing a shoulder machining with the inventive insert, the height of the machined shoulder is not limited by the insert. A limitation of the depth will only be given due to geometry of an associated cutter.

The inventive doubled-sided insert can be used on end mill cutting tools having a comparatively small diameter, for example when using a cutting tool with two or more inserts the tool having a diameter with a size of about 2.5 times the size of the inscribe circle (IC) of the insert.

In one embodiment, the secondary side surfaces are deflected with a constant angle towards the center axis. In other embodiments, the deflection is not constant and/or the surfaces are curved towards the center axis. In such embodiments, the tangential extension is derived from a line approximation of the secondary side surfaces.

Due to the distance between the first and the second imaginary intersection point, a clearance between the insert, more particular an associated insert corner, and a machined work piece for performing an effective wiping operation is provided.

In one embodiment, the deflection of the secondary side surfaces is such that the distance D between the first imaginary points and the second imaginary points is at least 0.5% of the insert inscribe circle (IC), more preferably between about 0.5% and about 2% of the insert IC. In some embodiments the secondary side surfaces are deflected with a constant angle. In other embodiments, the angle of the deflection varies and/or the secondary side surfaces are bend.

Preferably, the deflection of all secondary side surfaces is equal within production tolerances. With such a design, the first and the second imaginary point and the center axis lay in one plane, which plane is inclined with an angle of 45° with respect to bisectors of the side surfaces. The projected curves of all four cutting edges on the median plane are the boundary of the intersection of the side surfaces with planes parallel to the median plane. In some embodiments the side surfaces are essentially parallel to the center axis.

Each cutting edge has an uppermost point located in the region of or next to the associated secondary convex cutting edge and a lowermost point located in the region of or next to the secondary concave cutting edge, wherein in one embodiment the height difference is at least 5% of the insert inscribe circle (IC). The height of the uppermost point, for example defined with respect to the median plane, defines the diameter of the shoulder cut into the work piece. For ensuring an effective shoulder milling, a ratio of the height difference and the insert IC of at least 5% is preferred.

The end surfaces are provided with abutment surfaces, which are seated on respective seat surfaces of a cutting tool. In one embodiment, the seat surfaces are provided with recesses for accommodating cutting edges not in use. In a preferred embodiment, the distances of the abutment surfaces from the median plane exceed the cutting edges of the associated end surfaces. In other words, all cutting edges are below the abutment surface of an upper end surface and above the abutment surface of a lower end surface. This allows the insert to be retained in the pocket, avoiding an interference of the cutting edges not in use with the cutting tool. The primary side surfaces of the cutting edges not in use may be used as additional abutment surfaces for retaining the insert.

The cutting edge may be provided with additional sections. However, in preferred embodiments, the primary cutting edge connects the secondary concave cutting edges with the secondary convex cutting edges. The primary cutting edge in one embodiment is a straight line. In other embodiment, the primary cutting edge is curved or bended.

The first and the second end surfaces have a rectangular surface area. Preferably, the first and the second end surfaces have a substantially square surface areas allowing the insert to be indexed and re-used in the same tool.

The object is further solved by a cutting tool having at least one pocket in which an inventive double-sided indexable insert is replaceably retained, such that a first cutting edge projects from a peripheral surface of the cutting tool, and an adjacent second cutting edge projects from a front surface of the cutting tool the associated secondary concave cutting edge serving as a wiper.

The insert can be used on rotational tools, such as end mill cutters and face mill cutters, and also can be used on stationary tools, like holders for turning operations. Preferably, the cutting tool is a milling cutter tool.

The pocket in preferred embodiments has seat surfaces for positioning the insert with a negative axial angle and a negative radial angle to ensure a clearance to the work piece surface and the relief angle.

When positioning the insert in the cutting tool, the insert is preferably positioned such that the abutment surface of the insert abuts the bottom surface of the pocket of the cutting tool and the primary side surfaces of the insert, which are not in use, abut the side surfaces of the pocket.

### Brief Description of the Drawings

In the following, an embodiment of the invention will be described in detail based on several schematic drawings in which
- Fig. 1:: is a perspective view of a double-sided indexable cutting insert;
- Fig. 1a:: is a side view of the cutting insert of Fig. 1;
- Fig. 1b:: is a top view of the replaceable cutting insert of Fig. 1;
- Fig. 1c:: is a detail lc of fig. 1 b;
- Fig. 2:: is a perspective view of an end mill cutter retaining the cutting insert of figure 1;
- Fig. 2a:: is face view of the end mill cutter of fig. 2 retaining the cutting insert;
- Fig. 2b:: is a partial side view of the end mill cutter of fig. 2 retaining the cutting insert; and
- Fig. 2c:: is a partial top view of the end mill cutter of fig. 2 retaining the cutting insert.

### Detailed Description of a Preferred Embodiment

In the following, an embodiment of the invention will be described in detail with reference to the drawings. Throughout the drawings, the same elements will be denoted by the same reference numerals.

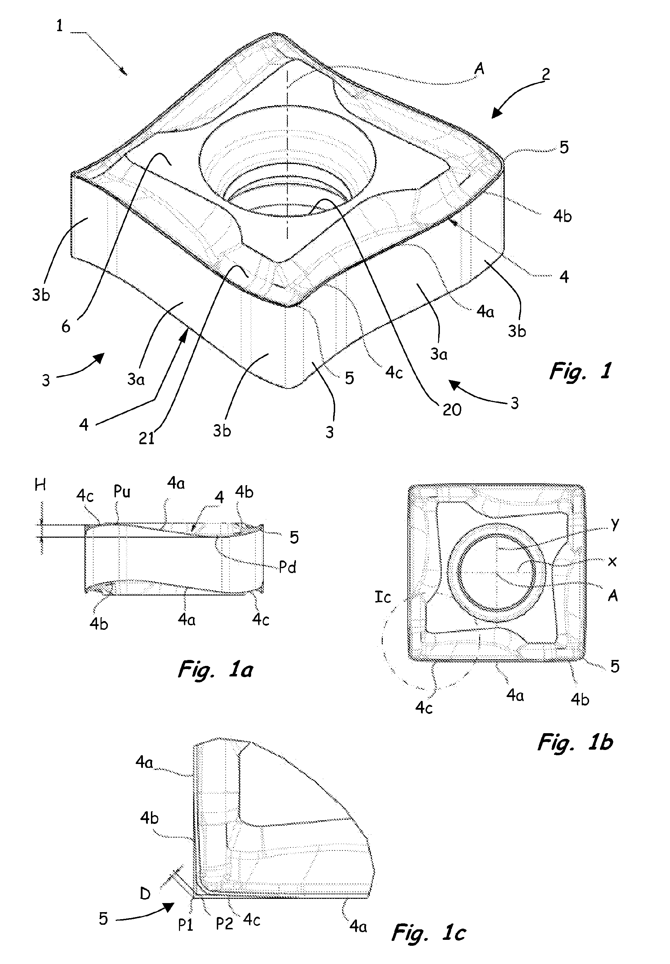

Figs. 1, 1a, 1b and 1c show an embodiment of a double-sided indexable cutting insert 1 in accordance with the invention, wherein fig. 1 is a schematic perspective view of the cutting insert 1, fig. 1 a is a side view of the insert 1, fig. 1b is a top view of the insert and fig. 1c shows a detail Ic of fig. 1 b. The double-sided indexable cutting insert 1 is also referred to as replaceable cutting insert 1 or simply cutting insert 1 or insert 1.

The depicted cutting insert 1 has a first and a second substantially square end surface 2 facing opposite directions and having four associated insert corners 5 each. The first and the second end surfaces 2 are also referred to as top and bottom surface of the insert. In the depicted embodiment, the end surfaces 2 each comprise a screw sink hole surfaces 20 at the center of insert, a chip former 21 or chip breaker surface in the periphery boundary and an abutment surface 6 arranged between the screw sink hole surfaces 20 and the chip former surfaces 21.

Further, the cutting insert 1 has four side surfaces 3 connecting the first and the second end surface 2 to form a total of eight cutting edges 4. The depicted insert 1 has an axial rotational symmetry, as can be seen in Fig. 1 and Fig. 1 b.

Each cutting edge 4 comprises a primary cutting edge 4a, a secondary concave cutting edge 4b and a secondary convex cutting edge 4c, the primary cutting edge 4a being sandwiched between the secondary concave cutting edge 4b and the secondary convex cutting edge 4c.

In the context of the invention, the terms "convex" and "concave" are defined with respect to a median plane (not shown in the figures) that is located parallel and between the first and second end surfaces 2, preferably substantially mid-way between the end surfaces 2. The secondary convex cutting edge 4c extends away from the median plane and the secondary concave cutting edge 4b extends towards the median plane.

In the depicted embodiment, the secondary convex cutting edges 4c on the first end surface 2 of the insert 1 and the secondary concave cutting edges 4b on the second end surface of the insert 1 lay one above the other and the bending of the secondary concave cutting edge 4b and the secondary convex cutting edge 4c is substantially equal. In other embodiments, the bending of the secondary concave cutting edge 4b and the secondary convex cutting edge 4c differ from each other.

As can be best seen from Fig. 1a, the wave shaped cutting edge 4 has an uppermost point Pu, which is located in the region of the secondary convex cutting edge 4c, and a lowermost point Pd, which is located in the region of the secondary concave cutting edge 4b. The distance in the direction of the center axis between the uppermost point Pu and the lowermost point Pd perpendicular to the end surfaces 2 is the height difference H. The diameter cut into a work piece (not shown) depends on the height of the uppermost point Pu, defined for example with respect to the median plane.

In the depicted embodiment, the ratio of the height difference H to the insert inscribe circle (IC) is above 5% to ensure effective shoulder milling operations. As can be seen in Fig. 1a, in the depicted embodiment, the uppermost point Pu is below the plane of the abutment surface 6.

The secondary convex cutting edge 4c and the secondary concave cutting edge 4b of adjacent side surfaces 3 converge in the associated insert corner 5. The corners 5 are truncated providing round corner areas. As can be best seen in figs. 1b and 1c, the secondary cutting edges 4b, 4c and the associated regions of the side surfaces 3 are deflected with respect to the primary cutting edges 4a and the associated regions of the side surfaces 3.

Fig. 1c shows a first imaginary point P1, in which tangential extensions of the primary side surfaces 3a of the two side surfaces 3 associated with the corner 5 intersect. In the depicted embodiment, adjacent primary side surfaces 3a are substantially perpendicular. Fig. 1c further shows a second imaginary point P2, in which tangential extensions of the secondary surfaces 3b (shown in fig. 1) extending from the corner 5 intersect. As can be seen in fig. 1c, due to the deflection of the secondary side surfaces 3b, the first and the second imaginary point P1 and P2 do not coincide, but are spaced by a distance D. The distance D between the first imaginary point P1 and second imaginary point P2 is a parameter for expressing the deflection between each of the two secondary side surfaces 3b and the primary side surfaces 3a.

In the depicted embodiment, the deflection between the secondary side surfaces 3b and the primary side surfaces 3a is about 2°. In other embodiments the deflection is preferably between 1 ° and 3°. Due to the deflection, the second imaginary point P2 is closer to the center axis A of the insert than the first imaginary point P1. The two bisectors of the side surfaces are referred to as the insert horizontal axis x and insert vertical axis y on the median plane. Due to the geometry of the depicted insert 1, wherein the secondary side surfaces 3b have equal deflections, the imaginary points P1 and P2 and the insert center axis A lay in one plane, which is inclined with an angle of 45° with respect to the horizontal axis x and the vertical axis y.

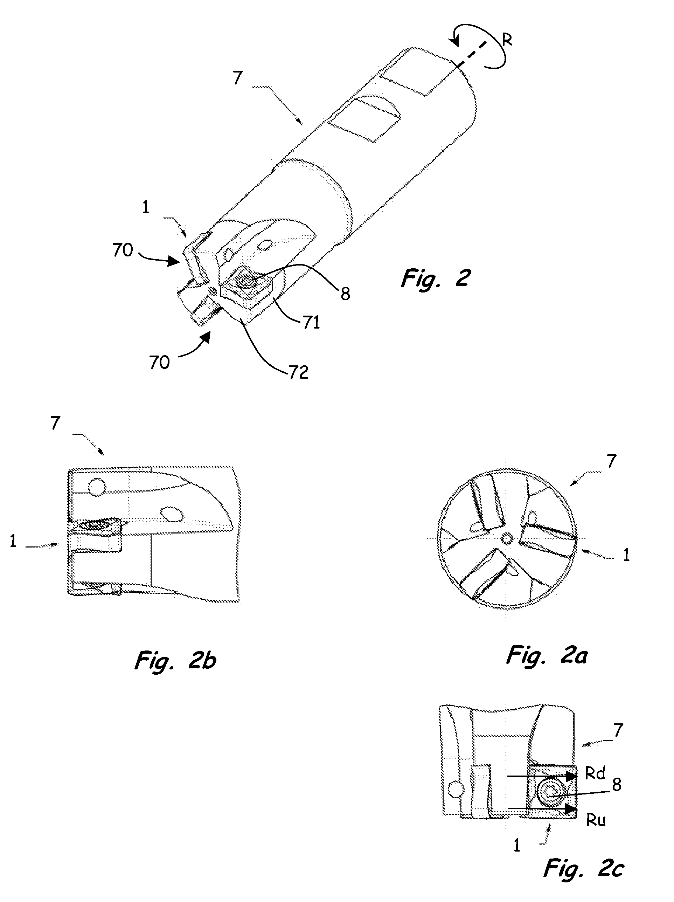

In use, the cutting insert 1 is retained in a pocket 70 of a cutting tool 7 as depicted in figs. 2, 2a. 2b and 2c. The shown cutting tool 7 is one of many possible variations of cutters, and it is shown for illustration purpose only.

In the depicted embodiment, the cutting tool 7 has three pockets 70. In other embodiments, the cutting tool 7 has only one or two pocket(s) 70 or more than three pockets 70. The pocket 70 opens to the peripheral surface 71 of the cutting tool 7 and to its front surface 72. The insert 1 is placed in the pocket 70, wherein the abutment surface 6 (shown in fig. 1) is seated in the pocket 70 at the bottom surface and two successive cutting edges 4 project from the peripheral surface 71 and the front surface 72, respectively. The insert 1 is retained using a screw 8. During a cutting application, the cutting tool 7 is rotated about a rotational axis R.

The secondary concave cutting edge 4b of the cutting edge 4 protruding from the front surface 72 functions as a wiper and performs the wiping operation. The deflection of the secondary concave cutting edges 4b, with respect to the primary cutting edges 4a provides a clearance between the insert 1 and the machined surface of the work piece. This clearance is essential for performing an effective wiping operation.

The insert is positioned in such way that ensures that the shoulder is cut with substantially 90°. The insert 1 is positioned at the cutting tool 7 at a negative radial angle to obtain the insert radial relief angle and to obtain the required insert clearance. Further, the insert is positioned at a negative axial angle to obtain the insert axial relief angle for the wiper surface of the work piece.

The distance of the uppermost point Pu (see Fig. 1a) from the rotary cutting tool axis R is defined as Ru, and the distance of the lowermost point Pd (see Fig. 1 a) from the rotary cutting tool axis R is defined as Rd. The difference between Ru and Rd is ΔR, ΔR=Ru-Rd. Due to the positioning of the insert 1 at the cutting tool 7 at a negative radial angle, ΔR will increase with a height difference H defined as the distance between Pu and Pd as described with reference to Fig. 1 a.

Because of restrictions in positioning a double sided milling insert 1 in a rotary cutting tool 7, according the provided invention, the value of ΔR is positive for height differences H for which the ratio of the height difference and the insert IC is at least 5%. A positive value of ΔR ensures the suitability to achieve the 90° shoulder milling with unlimited depth. Preferably, the value ΔR is about 0.03mm.

The deflection between secondary cutting edges 4b, 4c and the primary cutting edge 4a in combination with the wave shape of cutting edge 4 gives the insert the desired ability to perform square shoulder milling operation with a indexable insert having eight cutting edges.

## Claims

1. Double-sided indexable cutting insert (1) comprising:
a center axis (A);
first and second end surfaces (2) being arranged substantially perpendicular to the center axis (A) and facing opposite directions, each end surface having four associated corners (5);
four side surfaces (3) connecting the first and second end surfaces (2), wherein eight cutting edges (4) are formed in the transition between the first and second end surfaces (2) and the side surfaces (3),
each cutting edge (4) comprising a primary cutting edge (4a); and
a median plane perpendicular to the center axis (A) and located between the first and second end surface (2),
**characterized in that**
each cutting edge (4) further comprises a secondary concave cutting edge (4b) extending towards the median plane and a secondary convex cutting edge (4c) extending away from the median plane, the primary cutting edge (4a) being arranged between the secondary concave cutting edge (4b) and the secondary convex cutting edge (4c), and
each side surface (3) comprises a primary side surface (3a) and two secondary side surfaces (3b), the primary side surface (3a) being arranged between the two secondary side surfaces (3b), wherein the secondary side surfaces (3b) are deflected with respect to the primary side surface (3b) towards a center axis (A) of the insert, tangential extensions of primary side surfaces (3a) of adjacent side surfaces (3) and the first and second end surfaces (2) intersect in first imaginary points (P1), and wherein tangential extensions of adjacent secondary side surfaces (3b) and the first and second end surfaces (2) intersect in second imaginary points (P2), the second imaginary points (P2) being closer to a center axis (A) of the insert than the first imaginary points (P1).

2. The insert according to claim 1, **characterized in that** the deflection of the secondary side surfaces (3b) is such that the distance (D) between the first imaginary points and the second imaginary points is at least 0.5% of the insert (1) inscribe circle, preferably between about 0.5% and about 2% of the insert (1) inscribe circle.

3. The insert according to claim 1 or 2, **characterized in that** the deflections of all secondary side surfaces (3b) are equal.

4. The insert according to claim 1, 2 or 3, **characterized in that** each cutting edge (4) has an uppermost point (Pu) located in the region of or next to the associated secondary convex cutting edge (4c) and a lowermost point (Pd) located in the region of or next to the secondary concave cutting edge (4b), wherein the height difference (H) is at least 5% of the insert (1) inscribe circle.

5. The insert according to any of the preceding claims, **characterized in that** each end surface (2) is provided with an associated abutment surface (6), wherein the distance of the abutment surface (6) from the median plane exceeds the cutting edges (4).

6. The insert according to any of the preceding claims, **characterized in that** for each cutting edge (4) the primary cutting edge (4a) connects the secondary concave cutting edges (4b) with the secondary convex cutting edges (4c).

7. The insert according to any of the preceding claims, **characterized in that** the first and the second end surfaces (2) have rectangular, in particular substantially square surface areas.

8. Cutting tool having at least one pocket (70) in which a double-sided indexable insert in accordance with any of the preceding claims is replaceably retained, such that a first cutting edge (4) projects from a peripheral surface (71) of the cutting tool (7) and an adjacent second cutting edge (4) projects from a front surface (72) of the cutting tool (7) the associated secondary concave cutting edge (4b) serving as a wiper.

9. The cutting tool according to claim 8, **characterized in that** the pocket (70) is arranged such that the retained cutting insert (1) is positioned with a negative axial angle and a negative radial angle.

10. The cutting tool according to claim 8 or 9, characterized that the abutment surface (6) of the insert (1) abuts the bottom surface of the pocket (70) of the cutting tool (7) and the primary side surfaces (3a) of the insert (1), which are not in use, abut back and side peripheral surfaces of the pocket (70).
